(19) Europäisches Patentamt / European Patent Office / Office européen des brevets

(11) **EP 2 337 408 A1**

(12) **EUROPEAN PATENT APPLICATION**

(43) Date of publication:
    **22.06.2011 Bulletin 2011/25**

(51) Int Cl.:
    *H04W 52/34* *(2009.01)*    *H04W 52/14* *(2009.01)*
    *H04W 52/24* *(2009.01)*    *H04W 52/36* *(2009.01)*

(21) Application number: **09290942.3**

(22) Date of filing: **15.12.2009**

(84) Designated Contracting States:
    **AT BE BG CH CY CZ DE DK EE ES FI FR GB GR
    HR HU IE IS IT LI LT LU LV MC MK MT NL NO PL
    PT RO SE SI SK SM TR**
    Designated Extension States:
    **AL BA RS**

(71) Applicant: **Alcatel Lucent
    75008 Paris (FR)**

(72) Inventors:
    • **Betrencourt, Samuel
      92140 Clamart (FR)**
    • **Dartois, Luc
      91620 Nozay (FR)**

(74) Representative: **Croonenbroek, Thomas Jakob et
    al
    Cabinet Innovincia
    11, Avenue des Tilleuls
    74200 Thonon-les-Bains (FR)**

Remarks:
    Amended claims in accordance with Rule 137(2)
    EPC.

(54) **Method for managing power levels in a wireless cellular network**

(57)    The present invention refers to a method for managing power levels in the uplink communications of user equipments attached to the base station of a network small cell wherein the contribution of neighbouring cells user equipments in the interference level produced at said base station is taken into account in the determination of the attached user equipment power levels.

**Fig.4**

EP 2 337 408 A1

## Description

## BACKGROUND OF THE INVENTION

The present invention relates to the field of telecommunications and more specifically of uplink (UL) power level management in a cellular network comprising small cells.

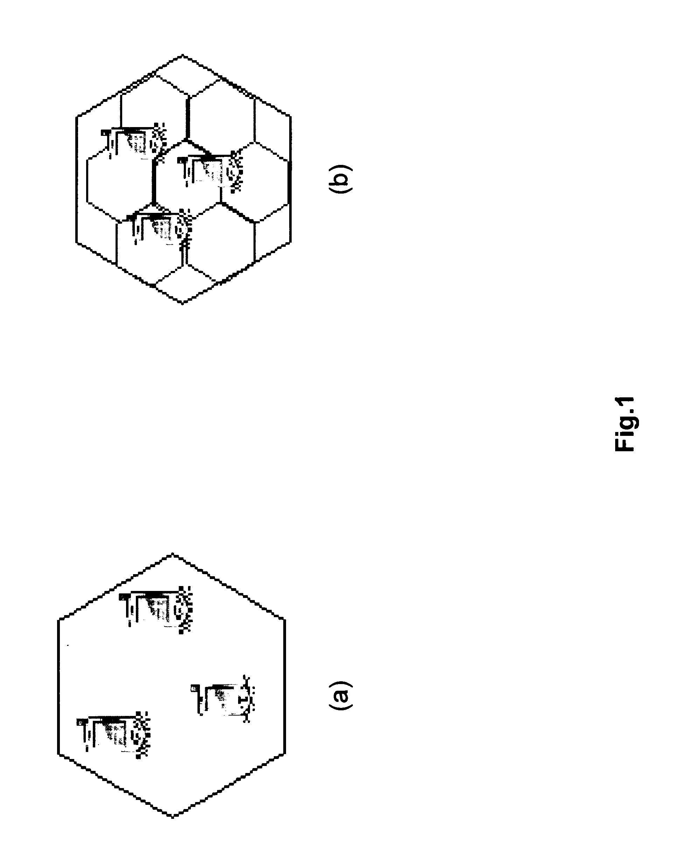

The rise of traffic, especially in the urban region, has lead to the development of small cells which allow to enhance the network capacity. Indeed, as described in Fig.1, the area covered by one macro-cell (a) is covered by many small-cells (b) which contributes to reduce the number of active users per cell and therefore to increase the bandwidth of a user. Such small cells are generally used in addition to macro-cells and are mainly used to improve indoor coverage or to provide local hot spots.

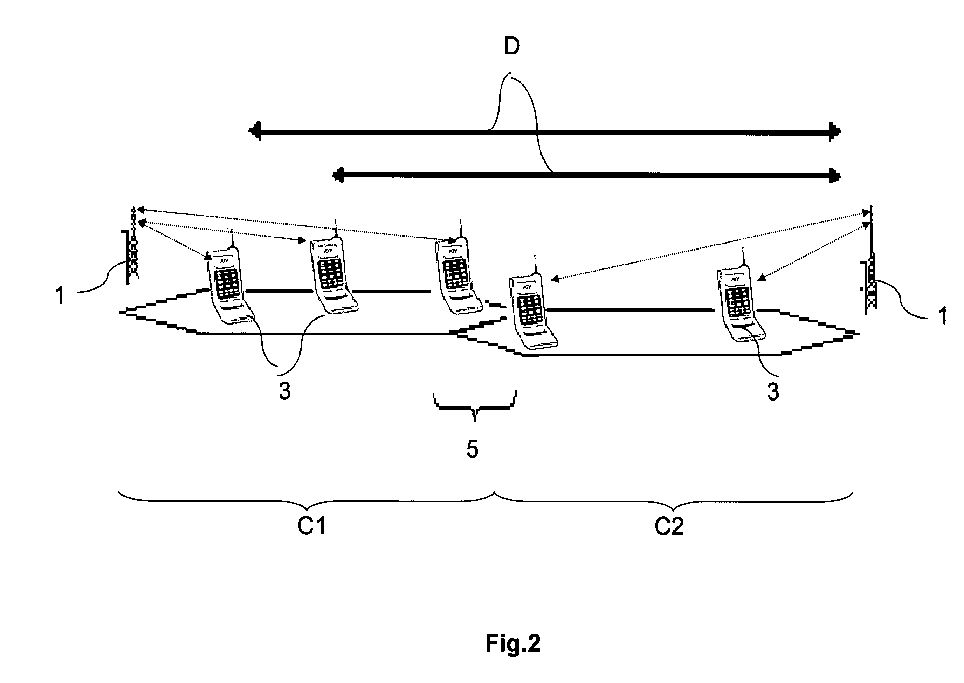

In macro-cells, as described in Fig.2, uplink (UL) inter-cell interferences are negligible due to power control and path loss isolation induced by the distance D between a base station 1 and user equipments 3 of a neighbouring cell (such as cell C1 with respect to cell C2) and soft handover control of the user equipments located close to the cell boundaries and consequently in a soft handover area 5. Thus, power management algorithms used in the macro-cells select the power level of the user equipments 3 in function of the intra-cell interference level.

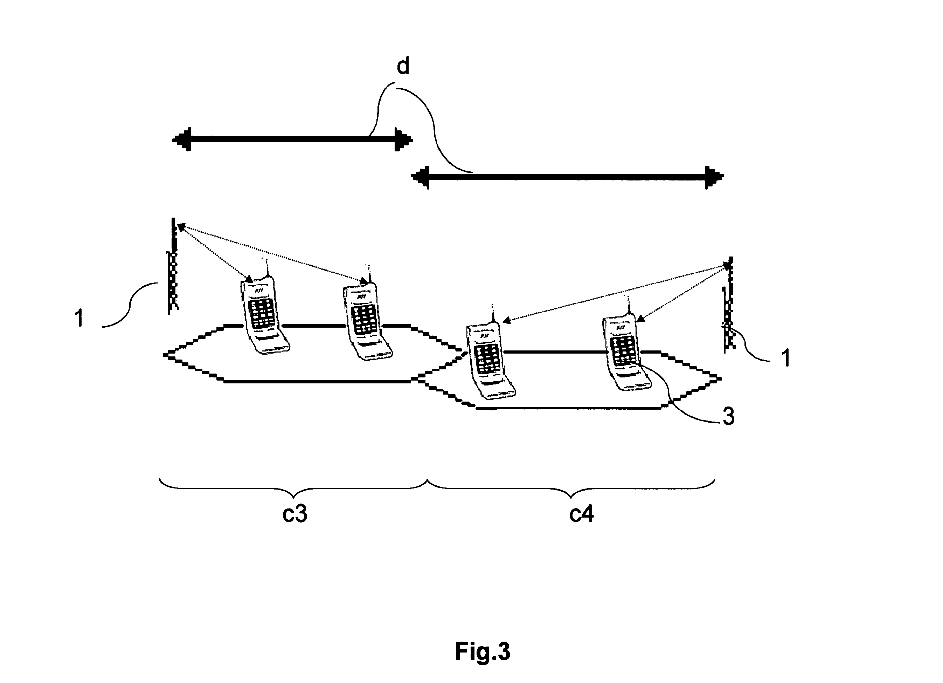

Unlike macro-cells, small cells such as c3 and c4 represented in Fig.3 do not generally have soft handover mechanism (in order to reduce the last mile cost) and the reduced distance d between base stations 1 and neighbouring cells cancels the path loss isolation (of the macro-cells) and produces non-negligible inter-cell interferences.

Power level management algorithms used in the macro-cells can therefore not be applied efficiently in small cells. Indeed, an increase of power level of the user equipments 3 of a small cell without taking into account the user equipments 3 of the neighbouring cells would increase the interferences in both cells, producing an increase of the power level of the user equipments of the neighbouring cell creating an avalanche effect between the different neighbouring cells which would lead eventually to an outage of the connections. This problem becomes even more important with technologies such as enhanced-dedicated channel (E-DCH) as the power level of a user equipment may reach a high level in order to improve its transmission throughput and therefore produce an uplink overload.

## SUMMARY OF THE INVENTION

It is therefore an object of the present invention to provide a method allowing the power management of the user equipments attached to the base stations of small cells.

Thus, the present invention refers to a method for managing power levels in the uplink communications of user equipments attached to the base station of a network small cell wherein the contribution of neighbouring cells user equipments in the interference level produced at said base station is taken into account in the determination of the attached user equipment power levels.

According to another aspect of the invention, the maximum power levels of the user equipments attached to the base station decrease when the contribution of the neighbouring cell user equipments in the interference level produced at said base station increases.

According to an additional aspect of the invention, said management is dynamic in order to take into account the traffic variations and the interference level variations.

According to a further aspect of the invention, the maximum power levels of the attached user equipments vary along the time according to a pseudo-random algorithm.

According to another aspect of the invention, the pseudo-random algorithm is configured in function of the number of neighbouring cells.

According to an additional aspect of the invention, the uplink traffic is transmitted through an enhanced dedicated channel (E-DCH) technology.

According to a further aspect of the invention, said method is used in a cell cluster leading to an interference reduction within said cell cluster.

According to an additional aspect of the invention, the pseudo-random algorithm is configured to reduce the probability that the maximum power levels of the attached user equipments of two adjacent cells correspond to a high level at the same time.

The invention also refers to a radio resources management algorithm comprising instructions for managing power levels in the uplink communications of user equipments in network small cells wherein the contribution of neighbouring cells user equipments in the interference level is taken into account in the determination of the attached user equipment power levels.

The invention also refers to a small cell base station comprising means for determining power levels in the uplink communications of at least one user equipment attached to said base station and means for sending power level instructions to said at least one attached user equipment wherein the contribution of neighbouring cells user equipments in the interference level produced at said base station is taken into account in the determination of the attached user equipment power levels.

## BRIEF DESCRIPTION OF THE DRAWINGS

FIG.**1** is a diagram of a macro-cell (a) and a small cell (b) coverage;
FIG.**2** is a diagram of a macro-cell configuration;
FIG.**3** is a diagram of a small cell configuration;

FIG.**4** is a diagram of the power distribution in a first configuration of two adjacent small cells according to the present invention;

FIG.**5** is a diagram of the power distribution in a second configuration of two adjacent small cells according to the present invention;

FIG.**6** is a diagram of the evolution along the time of the maximum power level allocated by a base station to its attached user equipment according to the present invention;

FIG.**7** is a diagram of the evolution along the time of the maximum power level allocated by two neighbouring base stations to their attached user equipment along the time according to the present invention;

## DETAILED DESCRIPTION OF THE INVENTION

As used herein, the term "ROT" refers to the acronym Rise Over Thermal;

As used herein, the term "RRM" refers to the acronym Radio Resource Management;

As used herein, the term "small cell" refers to a cell with a small radius such as, for example, a femto-cell, a pico-cell or a micro-cell.

The embodiments of the present invention refer to the adaptation of the maximum power level of the uplink communications of the user equipments 3 attached to the base station 1 of a small cell in function of the interferences produced by the user equipments 3 located in the neighbouring cells of said base station 1.

The power level of the uplink communications of the attached user equipments 3 is determined in function of the signal quality measured by the base station 1 and is upper bounded by a maximum rise over thermal (ROT) threshold. Thus, if the quality of the uplink communication between a user equipment 3 and the base station 1 is too low to provide an efficient connection, the uplink scheduler of the base station 1 sends a request to the user equipment 3 in order to increase its emission power and therefore improve the quality of the communication. Nevertheless, this power level has to be limited in order to limit interferences and to provide fairness between the different connected user equipments 3. A maximum power level is therefore determined by a radio resource management (RRM) algorithm in function of the amount of traffic requested by connected user equipments 3.

Such distribution of power can be described as a bandwidth allocation and is determined based on received signal strength indication (RSSI) measurements and processed as a rise over thermal (ROT) factor which is defined as:

ROT=$I_{tot}/N_0$ where $I_{tot}$ is the total power received by the base station 1 and No is the thermal noise power.

The total received power $I_{tot}$ can be decomposed as follow:

$$I_{tot} = N_0 + \sum_{i=1}^{M} Ei + \sum_{j} Ej$$

with Ei the power received by the ith attached user equipment and Ej the power received by the jth user equipment attached to a neighbouring cell.

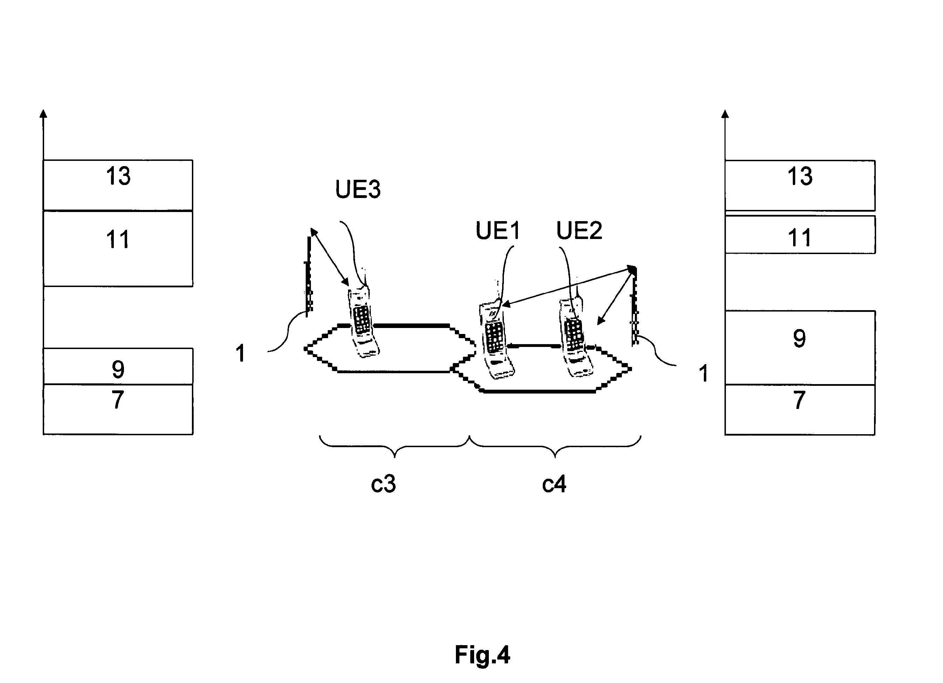

As mentioned previously, in the case of macro-cells, Ej is negligible and the power management algorithm of the uplink scheduler distributes the amount of power between the attached user equipments in function of the total available power and the interference level produced at the base station 1 respecting a fairness criterion between the different attached user equipments 3. However, in the case of small cells and notably in the case of networks using enhanced-dedicated channel (E-DCH), the Ej values are not negligible and contribute to the interference level and therefore influence the signal quality received at the base station 1. As a consequence, said contribution implies to modify the management of the power levels by the scheduler and to introduce an additional power reservation in the uplink (UL) radio resource management (RRM) algorithm corresponding to the contribution of user equipments 3 of the neighbouring cells. It has to be noted that the reservation may be dependent of the number of neighbouring cells. Such margin is represented in Fig.4 wherein the power distribution is represented for two adjacent small cells c3 and c4. The power distribution can be divided in several parts:

- a part corresponding to the thermal noise power (No) 7,
- a part corresponding to the rise over thermal (ROT) of the attached user equipment 9,
- a part corresponding to the rise over thermal (ROT) of the user equipments of the neighbouring cells 11 and,
- a part corresponding to a margin for "convergence" 13 which corresponds to the margin necessary for a correct functioning in case of new attachment of user equipments to the base station.

Thus, in the present configuration the uplink scheduler of the small cell c3 has to reserve power resources 11 for the user equipments UE1 and UE2 of the neighbouring cell c4 as they contribute to the $\sum_{j} Ej$ value of cell c3.

In the same way, cell c4 has to reserve UL resources 11 to take into account the user equipment UE3 of the neighbouring cell c3.

The power distribution remains dynamic within this defmed range in order to take into account the variations of attached user equipments and the variations of the number of user equipments of the neighbouring cells that contribute to the $\sum_j Ej$ value and therefore to the interference level.

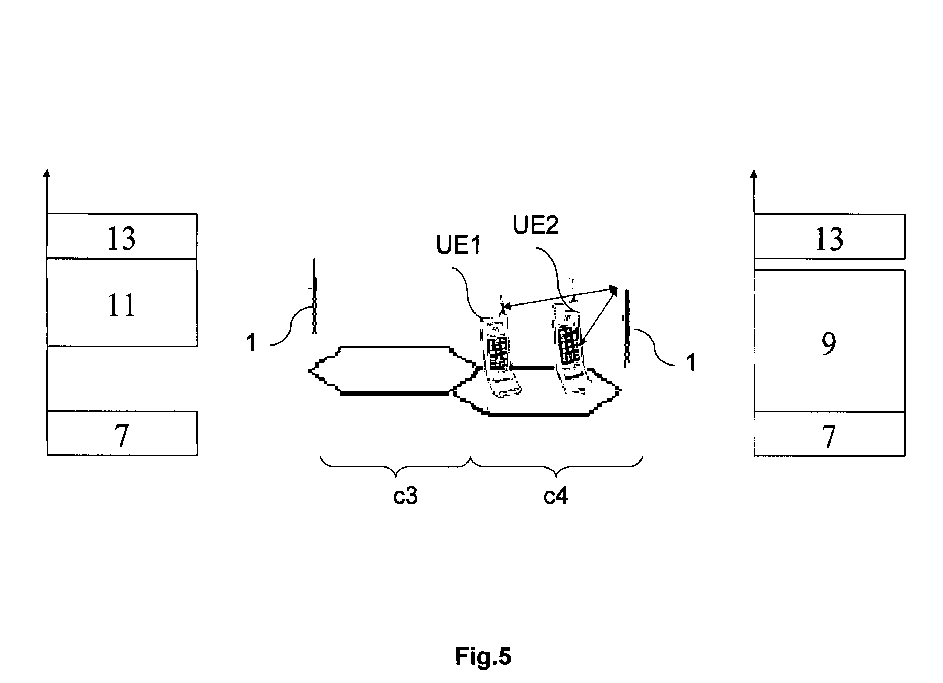

Figure 5 represents another configuration of the pair of cells presented in Fig.4 wherein the user equipment UE3 is no more attached to the base station 1 of cell c3.

The overall interference level in cell c4 is therefore reduced and more power can be allocated to the UE1 and UE2 from the base station 1 without affecting the neighbouring cell c3. As a consequence, the ROT value of the attached equipments 9 of cell c4 is increased whereas there is no more ROT part corresponding to the user equipment of the neighbouring cells 11 as there is no more user equipment attached to cell c3.

Concerning cell c3, as there is no more attached user equipments, additional resources can be added to the resource level reserved to the user equipments UE1 and UE2 of the neighbouring cell c4 11 without any impact on the network performances. The power level distribution of a small cell and its neighbouring cells is therefore updated each time the number of attached user equipments varies in order to regulate the interference level and to insure a correct functioning of the network.

Thus, according to the present invention, power resources are also reserved in order to take into account a burst of ROT, that is to say a temporary increase of the interference level, due to user equipments located in neighbouring cells (using for example a bursty data transfer) and contributing to the interference level produced at the base station. Based on the computation of the RRM algorithm, the uplink scheduler defmes the power level of the attached user equipments and power level instructions are sent to said attached user equipments.

As a consequence, such management of power distribution within a small cell taking into account the interference level produced by the user equipments of the neighbouring cells allows to introduce fairness between the different users, to reduce the overall interference level and therefore to improve the network performances.

Nevertheless, such margin represents an unused amount of power to secure new incoming users which is wasted if not used.

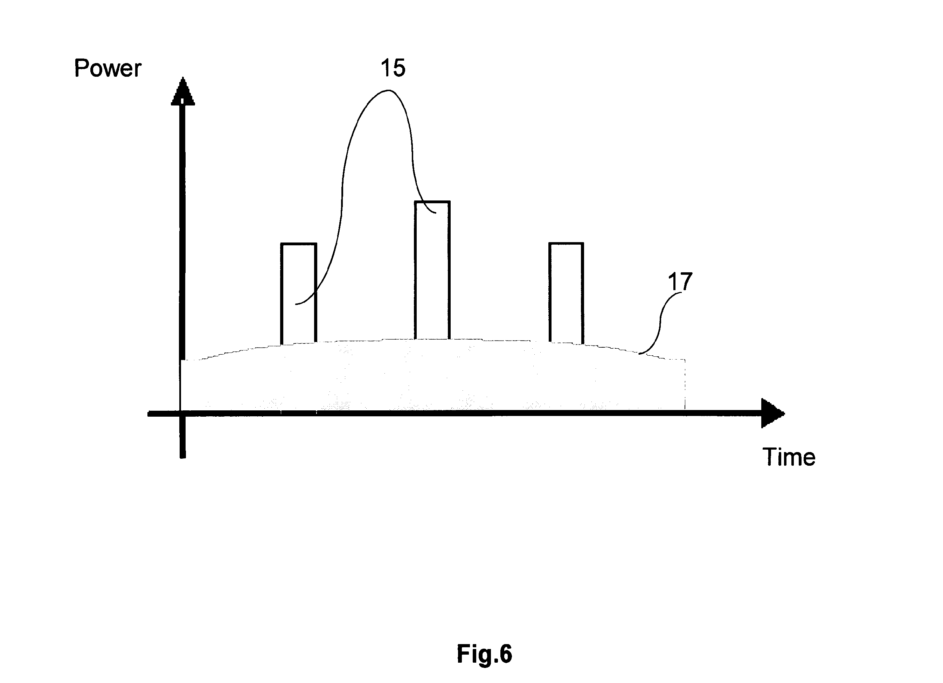

According to another aspect of the invention, such power margin is used temporarily by a base station according to a pseudo-random algorithm. Extra power 15 is provided sporadically to a base station 1 with respect to the maximum power 17 computed by the scheduler as described previously. Such temporal additional power margin allocation is represented in Fig.6. The amount of power and the pseudo-period being adjusted in function of the number of neighbouring cells. Said number of neighbouring cells can be configured or self-learnt by the base station 1.

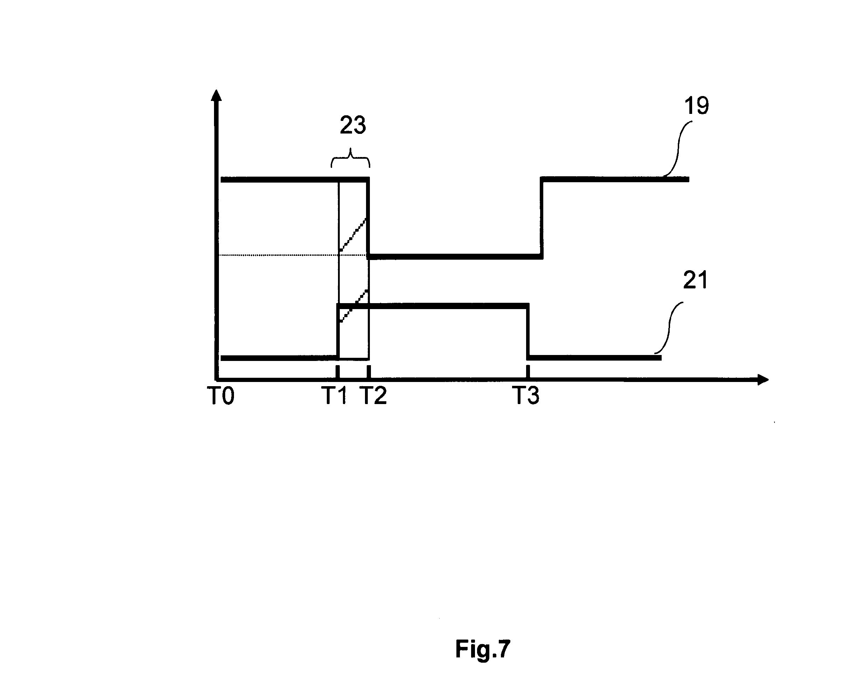

Such temporary margin can be compared to a random access channel (RACH) and limit the probability of collision as described in Figure 7 wherein the evolution of the maximum power level of two neighbouring cells along the time is shown. At time T0, the power level of the first cell 19 is at a high level (which corresponds to the extra temporary margin) while the power level of the second cell 21 is at a low level. At time T1, the pseudo-period of the RRM algorithm of the second cell has elapsed and extra margin is granted to the second cell. At time T2, the pseudo-period of the RRM algorithm of the first cell has elapsed and its power level return to a low level. Then, at time T3, the power level of the second cell returns to a low level. The different neighbouring cells get sequentially some extra power margin. As represented in Fig.7, the time range during which both cells are at a high level (between T1 and T2) and which corresponds to a period with a high collision probability 23 is very short. The collision probability is therefore limited. Such sequential grant corresponds to a pseudo-synchronization of the neighbouring cells to share the available extra power range. Thus, several small cells located in a common area can be "gathered" as a cell cluster wherein the pseudo-random algorithm distributes in a sequential way an extra power margin to the cells of the cluster. Moreover, the algorithm is configured in order to reduce the probability that the allocation of an additional power margin occurs at the same time in two adjacent cells leading thus to a reduction of the uplink interferences probability.

Thus, by taking into account the contribution of user equipments attached to neighbouring cells in the power level determination of its attached user equipments and by reserving a corresponding power margin, the present invention allows to provide fairness at a scale higher than the cell scale which is necessary in the case of small cells due to the lack of radio frequency isolation between the cells and to prevent the risk of damaging the global performances of the network. Furthermore, the use of a pseudo-synchronization allows to limit the part of wasted power and contributes to the optimization of the network resources.

**Claims**

1. Method for managing power levels in the uplink communications of user equipments attached to the base station of a network small cell wherein the contribution of neighbouring cells user equipments in the interference level produced at said base station is taken into account in the determination of the attached user equipment power levels.

2. Method for managing power levels in accordance with claim 1 wherein the maximum power levels of the user equipments attached to the base station decrease when the contribution of the neighbouring cell user equipments in the interference level produced at said base station increases.

**3.** Method for managing power levels in accordance with claim 1 or 2 wherein said management is dynamic in order to take into account the traffic variations and the interference level variations.

**4.** Method for managing power levels in accordance with one of the previous claims wherein the maximum power levels of the attached user equipments vary along the time according to a pseudo-random algorithm.

**5.** Method for managing power levels in accordance with claim 4 wherein the pseudo-random algorithm is configured in function of the number of neighbouring cells.

**6.** Method for managing power levels in accordance with one of the previous claims wherein the uplink traffic is transmitted through an enhanced dedicated channel (E-DCH) technology.

**7.** Method for managing power levels in accordance with one of the previous claims taken in combination with claim 4 wherein said method is used in a cell cluster leading to an interference reduction within said cell cluster.

**8.** Method for managing power levels in accordance with claim 7 wherein the pseudo-random algorithm is configured to reduce the probability that the maximum power levels of the attached user equipments of two adjacent cells correspond to a high level at the same time.

**9.** Radio resources management algorithm comprising instructions for managing power levels in the uplink communications of user equipments in network small cells wherein the contribution of neighbouring cells user equipments in the interference level is taken into account in the determination of the attached user equipment power levels.

**10.** Small cell base station comprising means for determining power levels in the uplink communications of at least one user equipment attached to said base station and means for sending power level instructions to said at least one attached user equipment wherein the contribution of neighbouring cells user equipments in the interference level produced at said base station is taken into account in the determination of the attached user equipment power levels.

**Amended claims in accordance with Rule 137(2) EPC.**

**1.** Method for managing power levels in the uplink communications of user equipments (3) attached to the base station (1) of a network small cell wherein the contribution of neighbouring cells user equipments in the interference level produced at said base station (1) is taken into account in the determination of the attached user equipment power levels **characterized in that** the maximum power levels of the attached user equipments vary over time according to a pseudo-random algorithm.

**2.** Method for managing power levels in accordance with claim 1 wherein the maximum power levels of the user equipments (3) attached to the base station (1) decrease when the contribution of the neighbouring cell user equipments in the interference level produced at said base station (1) increases.

**3.** Method for managing power levels in accordance with claim 1 or 2 wherein said management is dynamic in order to take into account the traffic variations and the interference level variations.

**4.** Method for managing power levels in accordance with one of the previous claims wherein the pseudo-random algorithm is configured in function of the number of neighbouring cells.

**5.** Method for managing power levels in accordance with one of the previous claims wherein the uplink traffic is transmitted through an enhanced dedicated channel (E-DCH) technology.

**6.** Method for managing power levels in accordance with one of the previous claims wherein said method is used in a cell cluster leading to an interference reduction within said cell cluster.

**7.** Method for managing power levels in accordance with claim 6 wherein the pseudo-random algorithm is configured to reduce the probability that the maximum power levels of the attached user equipments of two adjacent cells correspond to a high level at the same time.

**8.** Small cell base station (1) comprising means for determining power levels in the uplink communications of at least one user equipment (3) attached to said base station and means for sending power level instructions to said at least one attached user equipment (3) wherein it also comprises means for taking into account the contribution of neighbouring cells user equipments in the interference level produced at said base station (1)in the determination of the attached user equipment power levels and **characterized in that** it also comprises means for making the maximum power levels of the attached user equipments vary over time according to a pseudo-random algorithm.

(a)

(b)

Fig.1

EP 2 337 408 A1

**Fig.2**

EP 2 337 408 A1

Fig.3

13

11

9

7

UE3

UE1    UE2

1

1

13

11

9

7

c3

c4

**Fig.4**

EP 2 337 408 A1

**Fig.5**

**Fig.6**

EP 2 337 408 A1

**Fig.7**

EP 2 337 408 A1

**EUROPEAN SEARCH REPORT**

Europäisches
Patentamt
European
Patent Office
Office européen
des brevets

Application Number

EP 09 29 0942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/135754 A1 (YAVUZ MEHMET [US] ET AL) 28 May 2009 (2009-05-28)<br>* paragraph [0085] - paragraph [0088] *<br>* paragraph [0153] - paragraph [0161] *<br>----- | 1-10 | INV.<br>H04W52/34<br>H04W52/14<br>H04W52/24<br>H04W52/36 |
| X | WO 2009/120121 A1 (ERICSSON TELEFON AB L M [SE]; NYLANDER TOMAS [SE]; OLOFSSON HAAKAN [SE] 1 October 2009 (2009-10-01)<br>* abstract *<br>* page 8, line 8 - line 25 *<br>* page 10, line 10 - line 32 *<br>* page 11, line 9 - line 15 *<br>* page 11, line 33 - page 12, line 12 *<br>* page 13, line 1 - line 31 *<br>----- | 1-10 | |

TECHNICAL FIELDS
SEARCHED      (IPC)

H04W

The present search report has been drawn up for all claims

| Place of search | Date of completion of the search | Examiner |
|---|---|---|
| The Hague | 26 April 2010 | Lustrini, Donato |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 29 0942

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2010

| Patent document cited in search report | | Publication date | Patent family member(s) | | Publication date |
|---|---|---|---|---|---|
| US 2009135754 | A1 | 28-05-2009 | US | 2009135796 A1 | 28-05-2009 |
| | | | US | 2009137221 A1 | 28-05-2009 |
| | | | US | 2009137241 A1 | 28-05-2009 |
| | | | US | 2009135790 A1 | 28-05-2009 |
| | | | WO | 2009070608 A2 | 04-06-2009 |
| | | | WO | 2009070610 A2 | 04-06-2009 |
| | | | WO | 2009070614 A2 | 04-06-2009 |
| | | | WO | 2009070618 A1 | 04-06-2009 |
| WO 2009120121 | A1 | 01-10-2009 | NONE | | |

EPO FORM P0459

For more details about this annex : see Official Journal of the European Patent Office, No. 12/82